# EUROPEAN PATENT SPECIFICATION

(11) **EP 2 443 640 B1**
(45) Date of publication and mention of the grant of the patent: **22.10.2014**
(21) Application number: 10726062.2
(22) Date of filing: 16.06.2010
(51) Int. Cl.: H01G 9/20

(54) **DYE SENSITISED SOLAR CELL AND METHOD OF MANUFACTURE**
FARBSTOFFSENSIBILISIERTE SOLARZELLE UND VERFAHREN ZU IHRER HERSTELLUNG
CELLULE SOLAIRE À COLORANT ET SON PROCÉDÉ DE FABRICATION

(30) Priority: 17.06.2009 US 187816 P
(43) Date of publication of application: 25.04.2012
(73) Proprietor: NLAB Solar AB, 104 20 Stockholm (SE)
(72) Inventor: LINDSTRÖM, Henrik, S-753 27 Uppsala (SE); FILI, Giovanni, S-112 45 Stockholm (SE)
(74) Representative: Giavarini, Francesco
(86) International application number: PCT/EP2010/058472
(87) International publication number: WO 2010/146088

(56) References cited:
- WO-A1-2008/034932
- WO-A1-2008/102046
- WO-A2-2009/127692
- NISHIMURA SUZUSHI ET AL: "Standing wave enhancement of red absorbance and photocurrent in dye-sensitized titanium dioxide photoelectrodes coupled to photonic crystals" JOURNAL OF THE AMERICAN CHEMICAL SOCIETY, AMERICAN CHEMICAL SOCIETY, NEW YORK, US LNKD- DOI:10.1021/JA034650P, vol. 125, no. 20, 21 May 2003 (2003-05-21), pages 6306-6310, XP002358669 ISSN: 0002-7863
- MIHI A ET AL: "Enhanced power conversion efficiency in solar cells coupled to photonic crystals" PROCEEDINGS OF THE INTERNATIONAL SOCIETY FOR OPTICAL ENGINEERING (SPIE), SPIE, USA, vol. 6640, 1 January 2007 (2007-01-01), pages 664007-1, XP002573391 ISSN: 0277-786X
- COLODRERO S ET AL: "Porous one-dimensional photonic crystals improve the power-conversion efficiency of dye-sensitized solar cells" ADVANCED MATERIALS 20090216 WILEY-VCH VERLAG DE, vol. 21, no. 7, 16 December 2008 (2008-12-16), pages 764-770, XP002595323 DOI: DOI:10.1002/ADMA.200703115

## Description

### Field of invention

The present invention relates to a solar-to-electric energy conversion device having a light absorbing electrode with micrometer- and submicrometer-sized porous grains with 1D photonic crystal properties. The 1D photonic crystal grains have porous layers of nanoparticles that are stacked on top of each other in such a way that each grain acts like a 1D photonic crystal exhibiting Bragg reflector properties.

### Background of the invention

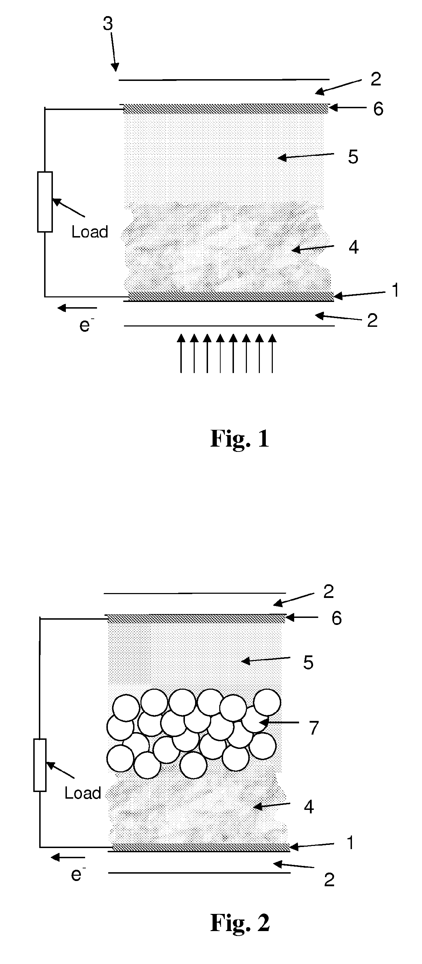

The present invention relates to solar cells and in particular to dye-sensitized solar cells as shown for example in US5084365. A dye-sensitized solar cell (DSC) typically has a few micrometer thick porous TiO₂ electrode layer deposited onto a transparent conducting substrate. The TiO₂ electrode normally consists of interconnected TiO₂ metal oxide particles (anatase structure, typical average crystal size around 20 nm). The dyed TiO₂ electrode is formed by adsorbing dye molecules (typically a Ruthenium polypyridyl complex) onto the surface of the TiO₂ particles. The adsorption of dye-molecules is usually achieved by soaking the TiO₂ electrode in a solution of dye-molecules for several hours. Figure 1 shows a prior art structure where the transparent conducting substrate 1 normally consisting of a transparent conducting oxide (TCO), FTO or ITO, deposited onto a glass substrate 2. The dyed TiO₂ electrode 4 is in contact with an electrolyte 5 (typically containing I⁻/I₃⁻ ion pairs) and another transparent conducting substrate, i.e., a counter electrode 3. The TCO layer 6 of the counter electrode is usually covered with a thin catalytic layer of platinum (not indicated in fig. 1).

Due to the low conductivity of the transparent conducting substrate, the dyed TiO₂ electrodes are typically deposited in segments with gaps in between in order to provide space for the deposition of current collectors between the TiO₂ electrode segments.

The edges of the transparent_conducting substrates are usually not deposited with TiO₂ electrode material. The two transparent_conducting substrates are usually sealed at the edges (using a hot melt such as Surlyn™1702) in order to protect the DSC components against the surrounding atmosphere and to prevent evaporation or leakage of the electrolyte.

Sunlight is harvested by the dye producing photo-excited electrons that are injected into the conduction band of the nanocrystalline TiO₂ semiconductor network, and then into the transparent conducting substrate. At the same time the redox electrolyte reduces the oxidized dye and transports the electron acceptor species (I₃⁻) to the counter-electrode. A record value of power conversion efficiency of 11% has been reported, although good quality DSCs typically provide between 5% and 8%.

One known way to increase the efficiency of DSCs is to increase the effective path of light in the TiO₂ electrode. This can be achieved as shown in figure 2 by depositing a porous diffuse scattering layer 7on top of the TiO₂ electrode. The porous diffuse scattering layer is normally several micrometers thick and consists of large non-porous light scattering TiO₂ particles (typically several hundreds of nanometres in diameter). The porous diffuse scattering layer increase the effective path of light in the dyed TiO₂ electrode 4 by acting as a mirror reflecting the light that is transmitted through the TiO₂ electrode back into the TiO₂ electrode again.

One problem with the use of a porous diffuse scattering layer consisting of several hundred nanometres sized non-porous particles is that it cannot easily be made transparent or semi-transparent. Consequently, DSCs containing this type of porous diffuse scattering layers are not suitable for windows and facade applications where transparency or semi-transparency is required.

Another problem is that the total TiO₂ film thickness increases with the deposited porous diffuse scattering layer leading to an increased ionic resistance in the electrolyte between the TiO₂ electrode and the counter electrode. An increased ionic resistance leads to an increased potential drop over the electrolyte lowering the fill factor of the DSC.

Another problem with a thicker TiO₂ electrode is that the absorption of dye takes longer time when the film thickness is larger due to the longer time for the dye-molecules to penetrate thicker porous layers when the thickness of the porous layer is increased.

Another problem with the diffuse scattering layer is that the photocurrents generated by dye-molecules adsorbed onto these large particles are relatively small due to the small surface-to-volume ratio of large non-porous particles.

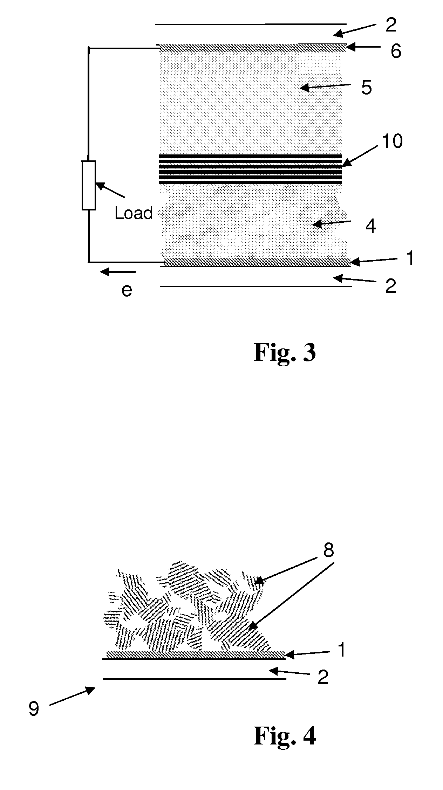

Another way to increase the effective path of the light is shown in figure 3. A deposition of a porous 1D photonic crystal (PC) 10 is made on top of the TiO₂ electrode 4. The PC is coupled to the TiO₂ electrode by deposition of a porous multilayer forming a structure of alternated particle layers of controlled thickness so that a periodic or quasi-periodic spacial modulation of the refractive index across the layers is achieved, Colodrero, S., Adv. Mater. 2008, 20, 1-7 and WO2008102046. By appropriate choice of the PC lattice parameters, the PC layer materials and the porosity of the layers within the PC, the PC can be designed to reflect light in certain wavelength regions and thereby increase the effective path of light in the dyed TiO₂ electrode in those wavelength regions. In order to reflect light efficiently (i.e., to achieve a strong reflectance peak) typically six or more alternated layers have to be deposited. Deposition of several layers of oxides with different porosities is described in WO2008034932. The deposition of each layer is made directly onto an optic device which is complicated and requires masking of areas which shall not be covered. Masking is especially important for coating techniques like dip-coating or spin coating.

The advantage with the PC concept is that the reflecting layer is both transparent in certain wavelength regions and reflective in other wavelength regions at the same time and therefore such PC layers can be used in DSCs for transparent or semi-transparent window applications. By depositing several PCs with different lattice parameters or different materials on top of each other it is possible to reflect light selectively in several specific regions of the light spectrum, thereby boosting the DSC performance selectively in different spectral regions.

The application of photonic crystals in DSCs involves the deposition of several thin film layers on top of the TiO₂ electrode.

The known method to deposit the porous PC is to spin coat the PC directly on top of the TiO₂ electrode. In order to provide clean transparent conducting substrate areas between the deposited TiO₂ electrode and the edges of the transparent conducting substrate i.e., the areas that are used for electrical connection- and sealing purposes, a mask must be applied in order to prevent coating the electric contact areas and/or sealing areas with PC material.

### Description of the invention

The invention concerns a further development of Dye Sensitised Solar Cells (DSC) comprising 1D porous photonic crystals.

The 1D PC are deposited to the DSC in the form of submicrometer- or micrometer-sized grains. The 1D PC grains can constitute a semiconducting electrode of the DSCs as well as enhancing the power conversion efficiency of the DSC by absorbing light and/or by reflecting light thereby selectively increasing the optical absorption of the electrode in certain wavelength regions in order to improve the light-to-electric energy conversion efficiency.

The porous 1D PC grains can be used as such or be mixed with semiconducting electrode nanoparticles.

The 1D PC grains have alternated layers of semiconducting particles creating a difference in the refractive index between the alternated layers.

The reflection of light in the 1D PC grains can be controlled by varying the porosity of the alternated layers and/or the thickness of the alternated layers and/or the materials in the alternated layers. Consequently, the optical response of the 1D PC grains can be controlled by varying the porosity of the alternated layers and/or the thickness of the alternated layers and/or the materials in the alternated layers.

1D PC grains with different optical response can be mixed together. This means that there is no need to deposit several different PC layers on top of each other for creating a tandem PC structure on top of the dyed TiO₂ electrode, but PC grains having different optical responses can be mixed beforehand instead.

The deposition of 1D PC grains to the DSC can be made by conventional deposition methods such as printing or spraying.

The 1D PC grains can form a network having direct physical and electrical contact with each other and the conducting substrate or indirect contact via the semiconducting electrode particles. The 1D PC grains can also comprise non-conductive material or materials and thereby act mainly as mirrors increasing the efficiency of the cell but without generating current within the grain itself.

The porous 1D PC grains are manufactured in a separate process before they are applied to the DSC.

The manufacturing of the 1D PC grains comprises depositing of a nanoparticle suspension into layers on a substrate and thereafter break the deposition into grains. The nanoparticles can be made of e.g., SiO₂, TiO₂, SnO₂, Al₂O₃, MgO, ZnO, Nb₂O₅, CeO₂, Fe₂O₃, Fe₃O₄, V₂O₅, Cr₂O₃, HfO₂, MnO₂, Mn₂O₃, Co₃O₄, NiO, Al₂O₃, In₂O₃, Sb₂O₃. CdS, CdSe, ZnS, ZnSe.

An advantage with the present invention is that it is possible to deposit a porous high surface area layer containing the 1D PC crystal grains in one step rather than using a multistep thin film deposition procedure forming the layers.

Since the 1D PC grains can contain the semiconducting electrode another advantage with the present invention is that there is no need to deposit the layers of the PC directly on top of the TiO₂ electrode layer with the risk of damage to the TiO₂ electrode.

Another advantage of the present invention is that the deposition of the PC is more flexible in terms of the patterns and geometries that can be used since the deposition is less limited by the printing technique since both thick and thin layers containing PC can be produced on small areas or large areas.

Another advantage is that the deposition geometry of the PC is not limited by the geometry of the absorbing layer, which eliminates problems with registering the PC print onto the TiO₂ electrode print.

Another advantage is that the total film thickness can be made smaller, since the light absorbing layer already contains the PC, thus leading to smaller losses in ionic resistance and electronic resistance.

Another advantage is that defects in tandem PCs produced on top of the TiO₂ electrode can be avoided since each PC grain type can be produced separately.

Another advantage is that the PC layer can be made both transparent and light scattering depending on the refractive index of the environment in which it is embedded.

Another advantage is that the porous PC grains can be used both as reflectors and light absorbers meaning that also the inner surface area of the grains can be used for light harvesting.

### List of drawings

- Figure 1 shows a schematic cross-sectional picture of a dye-sensitized solar cell.
- Figure 2 shows a schematic cross-sectional picture of a dye-sensitized solar cell with a diffuse scattering layer deposited on top of the TiO₂ electrode.
- Figure 3 shows a schematic cross-sectional picture of a dye-sensitized solar cell with a photonic crystal deposited on top of the TiO₂ electrode. The black lines and white spaces between the lines represent the alternated particle layer structure constituting the PC.
- Figure 4 shows a schematic cross-sectional picture of porous 1D photonic crystal TiO₂ electrode grains deposited on top of a conducting substrate. The lattice parameter and the PC material are constant, i.e., only one type of PC is used. The periodic variation of the refractive index across the PC grains is caused by porosity differences between the alternated layers.

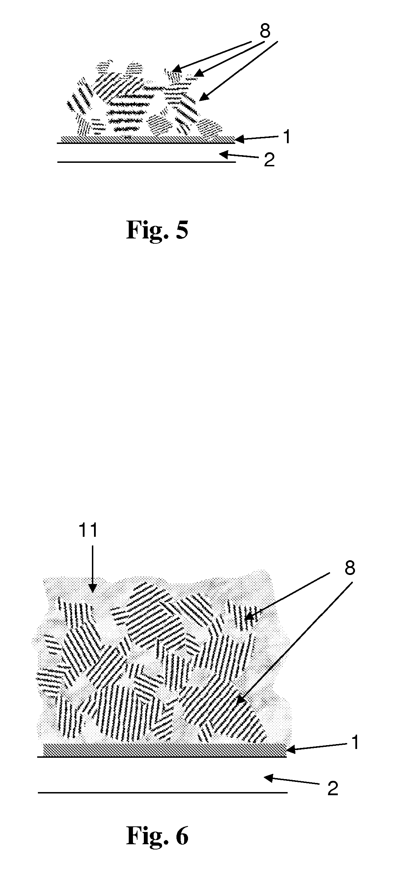

- Figure 5 shows a schematic cross-sectional picture of porous 1D photonic crystal TiO₂ electrode grains deposited on top of a conducting substrate. The periodic variation of the refractive index across the PC grains is caused by porosity differences between the alternated layers. Several different lattice parameters of the PC are used.
- Figure 6 shows a schematic cross-sectional picture of porous 1D photonic crystal TiO₂ electrode grains embedded in a matrix of nanoparticles deposited on a conducting substrate. Only one lattice parameter of the PC grains is used. The periodic variation of the refractive index across the PC grains is caused by porosity differences between the alternated layers.

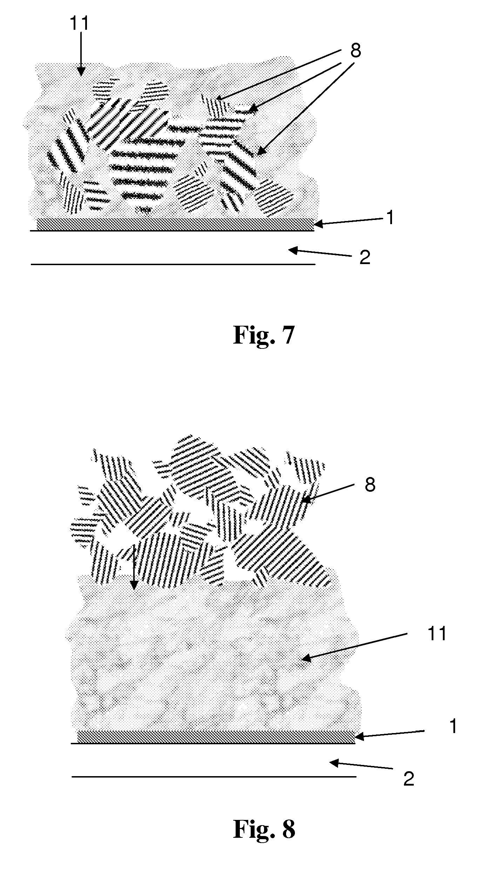

- Figure 7 shows a schematic cross-sectional picture of porous 1D photonic crystal TiO₂ electrode grains embedded in a matrix of nanoparticles deposited on top of a conducting substrate. Several different lattice parameters of the PC's are used. The periodic variation of the refractive index across the PC grains is caused by porosity differences between the alternated layers.
- Figure 8 shows a schematic cross-sectional picture of porous 1D photonic crystal TiO₂ electrode grains deposited on top of nanoparticles deposited on top of a conducting substrate. Only one lattice parameter of the PC grains is used. The periodic variation of the refractive index across the PC grains is caused by porosity differences between the alternated layers.

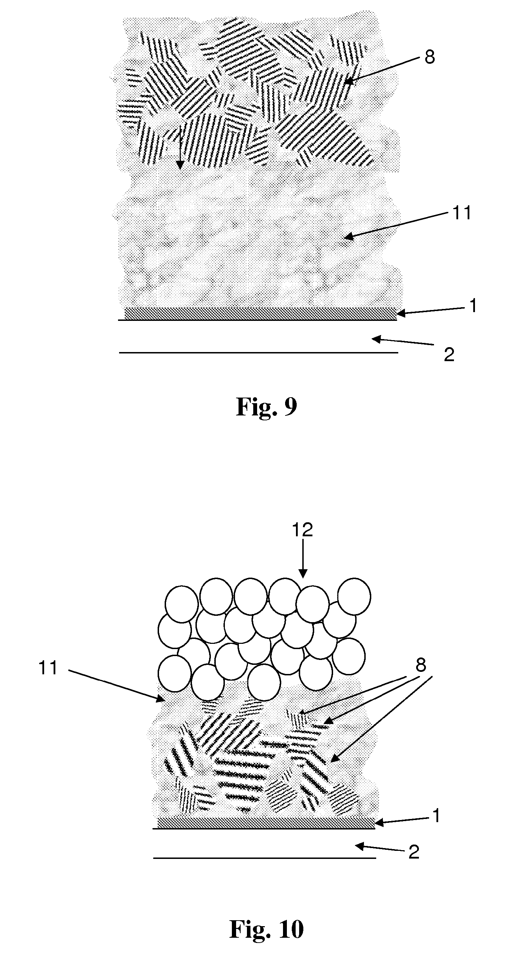

- Figure 9 shows a schematic cross-sectional picture of porous 1D photonic crystal TiO₂ electrode grains deposited on top of nanoparticles deposited on top of a conducting substrate. Several lattice parameters of the PC grains are used. The periodic variation of the refractive index across the PC grains is caused by porosity differences between the alternated layers.
- Figure 10 shows a schematic cross-sectional picture of porous 1D photonic crystal TiO₂ electrode grains embedded in a matrix of nanoparticles deposited on top of a conducting substrate. Several different lattice parameters of the PC are used. A diffuse scattering layer is deposited on top of the PC based TiO₂ electrode.

### Detailed description of the invention

The invention will be described in more detail and reference made to specific examples. It will be understood that no limitation of the scope due to specific language used is intended.

Figure 4 shows a porous 1D PC TiO₂ electrode having multiple 1D PC TiO₂ grains 8 deposited onto a transparent conducting substrate 9 comprising a transparent conducting oxide 1 and a glass substrate 2. The PC grains form a network and are in physical and electrical contact with each other and the conducting substrate. The black lines and the spaces between the black lines represent the alternated porous layers of nanoparticles creating a periodic variation of the refractive index in the PC.

Figure 5 shows an electrode having 1D PC grains 8 with different lattice parameters formed by the layers and having different thicknesses.

Porous 1D PC TiO₂ grains with different lattice parameters show a difference in optical response. It is also possible to create a difference of the optical response of the 1D PC grains by varying the porosity of the alternated layers while keeping the lattice parameter constant.

The optical response can also be changed by mixing grains containing different types of materials with different refractive index in the alternated layers. For example, an electrode consisting of both porous 1D PC TiO₂ grains consisting of layers of alternated porosity of TiO₂ and porous 1D PC grains consisting of alternated layers of TiO₂ and SiO₂, can be manufactured. It is not recommended to manufacture electrodes consisting entirely of 1D PC grains that contain electrically insulating materials such as SiO₂. However, mixtures of 1D PC grains that contain electrically insulating materials and 1D PC grains that contain semiconducting materials such as TiO₂ may be used.

The porous 1D PC grains 8 can be embedded in a matrix of semiconducting nanoparticles 11, see fig. 6 and fig. 7.

By embedding the porous 1D PC grains in a matrix of nanoparticles with similar or the same index of refraction as the 1D PC grains, it is possible to reduce the differences in the index of refraction between the 1D PC grains and their environment. Such embedment could be used in order to reduce the light scattering effect and to reduce the opacity created by the 1D PC grains.

In figure 8 is shown 1D PC grains 8 as a diffuse scattering layer on top of a TiO₂ electrode 11. By depositing 1D PC grains on top of the TiO₂ electrode it is possible to create a diffuse light scattering layer consisting of porous 1D PC's.

In figure 9 is shown light scattering 1D PC grains 8 embedded in a matrix of TiO₂ nanoparticles 11. By embedding the 1D PC grains the light scattering effect can be reduced.

It is also possible to deposit a conventional diffuse scattering layer 12 consisting of large non-porous TiO₂ particles on top of 1D PCs 8 embedded in nanoparticles 11 as shown in figure 10.

### Example 1

The 1D PC grains can be produced from PC films deposited onto substrates. Such a PC synthesis procedure can include the following steps:
a) deposit PC film on substrate
b) extract PC film
c) grinding PC film into grains

In a first step preparation of suspensions of nanoparticles is made. The particles can be made of e.g., SiO₂, TiO₂, SnO₂, Al₂O₃, MgO, ZnO, Nb₂O₅, CeO₂, Fe₂O₃, Fe₃O₄, V₂O₅, Cr₂O₃, HfO₂, MnO₂, Mn₂O₃, Co₃O₄, NiO, Al₂O₃, In₂O₃, Sb₂O₃. CdS, CdSe, ZnS, ZnSe. The size of the nanoparticles can be in the range of 1-100 nm. The volume concentration of nanoparticles in the suspension can be between 0.1% and 50%. The nanoparticles can be produced by any technique known in the art of nanoparticle production. The nanoparticles can be in the form of powders or colloidal suspensions or powder suspensions.

A suspension of nanoparticle powder can be produced using conventional techniques such as bead milling and sonication. The nanoparticle suspension formulation includes adequate solvents, binders or, additives etc depending on the application. The nanoparticle suspension formulation depends on the application at hand. Examples of solvents are water or alcohols etc. Examples of binders are PEG 20,000, PMMA, polystyrene, Carbowax™ or ethyl cellulose, methyl cellulose etc. Examples of additives are dispersion additives, levelling agents, deforming agents, anti-cratering agents, waxes etc.

PC films can be produced by depositing the nanoparticle suspensions on substrates using well known printing techniques such as: dip coating, spin coating, spraying (e.g., ultra sonic spraying), ink-jet, screen printing, rotary screen, flexo printing, gravure printing, embossed printing, Langmuir-Blodgett, slot-die coating, etc. It is preferred to use printing techniques capable of producing thin wet layers of sub-micrometer and micrometer thicknesses.

The multilayer structure having alternated layers can be formed by alternate deposition of layers of controlled thickness so that a periodic or quasi-periodic spatial modulation of the refractive index is attained across the multilayer.

After printing the first nanoparticle suspension layer the solvent is allowed to evaporate. The deposited film can then be subjected to a brief heat treatment to assure that most of the solvent is evaporated. The next nanoparticle suspension layer is then printed on top of the first dried nanoparticle suspension layer and the solvent is allowed to evaporate again possibly including a heating step if necessary and so forth. Several additional layers can be deposited on top of each other until sufficiently many layers have been printed on top of each other to yield the desired optical properties. In the case that the deposited films contain organic contents, such as binder that can be dissolved during the deposition of the layers it may be necessary to ensure that the binder in the deposited dried layers is removed by combustion by heating to a higher temperature. Care must be taken that the substrate material is not destroyed at these elevated temperatures. Alternatively, the nanoparticle suspension is essentially binder free and then a lower temperature can be used.

Alternatively, it is possible to use binders that are cross linked chemically or by heat or through light- or electron beam radiation before the application of the next layer.

Alternatively, it is possible to use two nanoparticle suspensions based on two different binders and two different solvent systems in such a way that the dissolution of the binders in the dried layers are reduced or significantly eliminated during the deposition of the layers. An example could be a water based nanoparticle suspension with hydroxypropyl cellulose binder and another nanoparticle suspension based on terpineol and ethyl cellulose binder. Since hydropropyl cellulose is insoluble in terpineol and since ethyl cellulose is insoluble in water it is possible to deposit alternating layers of the two different nanoparticle suspensions with reduced or eliminated dissolution of the binders in the dried layers.

Composites of polymer with nanoparticles, exhibiting 1D photonic crystal properties, have been manufactured using UV curable polymers containing nanoparticles combined with photo initiators. Such UV curable polymer-nanoparticle systems are suitable for flexo printing purposes. For example TiO₂ based UV curable polymer nanoparticle suspensions and SiO₂ based UV curable nanoparticle suspensions can be deposited in alternated layers with a UV curing step following each layer deposition. The UV cured polymer can then be removed by combustion in to create a porous 1D PC.

The substrate can be for example a metal foil, a polymer sheet, polymer film, or a glass substrate. Alternatively the substrate can be a combination of the above mentioned substrates such as a polymer deposited onto a metal foil or a polymer deposited onto a glass sheet. Even a polymer deposited onto a cellulose based substrate such as paper or board can be used. It is preferred that the surface of the substrate is as smooth as possible in order to create a PC film with high optical quality. Examples of metal substrates could be steel foil or aluminium foil. Examples of polymer substrates could be PE, PP, PA, PET, PVC etc. Specifically for polymer substrates, the total thickness of the substrate can be around 10 micrometers or thicker.

The deposited PC films can be removed from the substrate by for example dissolving the substrate in a solvent and then filtering the remaining PC product and then firing the filtered product.

Alternatively the PC product can be obtained directly by combusting the substrate in the case the substrate is easily combusted. Examples of easily combusted substrates are e.g., polymer substrates or polymer coated paper or polymer coated board.

The PC film can also be removed by mechanical scraping in the case rigid substrates are used such as glass or steel.

The PC can also be removed by infiltrating a polymer (5% solution of Poly(bisphenol-A-carbonate) in methylene chloride into the PC layer and then peeling off the polymer infiltrated PC layer in the form of a film. The self-standing polymer infiltrated film can then be heated in order to remove the polymer by combustion and in order to create mechanically stable PC grains.

The obtained 1D PC product can be fired at some point in order to remove combustible components and to sinter the nanoparticles of each layer inside the PC grains together in order to create a mechanically stable 1D PC structure within each grain.

The obtained 1D PC product is ground down to suitable sizes using conventional grinding equipment such as a bead mill, ball mill, or another milling technique. It is preferred that the major proportion of PC grains have sizes that are larger than the lattice spacing in the 1D PC crystal.

Suspensions can be prepared from grinded PC grains. A suspension of the PC grains can be produced using conventional techniques such as stirring, bead milling and sonication techniques. The PC suspension formulation includes adequate solvents, binders or, additives etc depending on the application. The PC suspension formulation depends on the application at hand. Examples of solvents are water or alcohols etc. Examples of binders are PEG 20,000, PMMA, polystyrene, Carbowax™ or ethyl cellulose, methyl cellulose etc. Examples of additives are dispersion additives, levelling agents, defoaming agents, anti-cratering agents, waxes etc.

It is also possible to mix suspensions of PC grains with suspensions of nanoparticles and/or large non-porous light scattering particles. It is also possible to prepare suspensions containing both 1D PC grains and nanoparticles and/or large non-porous light scattering particles in one step by mixing the PC grains and nanoparticles/light scattering particles together before preparing the suspension.

### Example 2

1D PC grains can also be manufactured using template-assisted synthesis. An example of template-assisted synthesis is shown in the following scheme:
a) Creating a 1D lamellar phase with hydrophilic and hydrophobic surfactant bilayers in solution. The surfactants can be polymeric, cationic, anionic or switterionic.
b) Functionalizing nanoparticles to create nanoparticles with hydrophobic and hydrophilic character.
c) infiltrating hydrophobic and hydrophilic functionalized nanoparticles into the 1D lamellar hydrophobic/hydrophilic bilayers in solution. (The hydrophobic nanoparticles would then enter the hydrophobic part of the lamellar phase and the hydrophilic nanoparticles would enter the hydrophilic part of the lamellar phase.) Alternatively, hydrophobically functionalized nanoparticles and hydrophilically functionalized nanoparticles are first mixed with a hydrophobic liquid phase and a hydrophilic liquid phase, respectively. The hydrophobic and hydrophilic liquid phase must be chosen such that they form lamellar hydrophobic/hydrophilic bilayers in solution. By mixing the hydrophobic liquid phase containing hydrophobically functionalized nanoparticles and the hydrophilic liquid phase containing hydrophilically functionalized nanoparticles, a 1D lamellar hydrophobic/hydrophilic bilayer in solution can be formed in where the hydrophobic liquid phase contains hydrophobic nanoparticles and the hydrophilic phase contains hydrophilic nanoparticles.
d) homogenisation and equilibration of the mixture obtained in c). The homogenisation could be accelerated at elevated temperatures and/or by sonication.
e) removing the solvent of the lamellar phase by heating, e.g., using a heating ramp of (1 to 10) C/min. It is preferred that the maximum temperature is lower than the boiling point of the solvent.
f) removing the organic surfactants by heating in air or oxygen, e.g., using a heating ramp of (1 to 10) C/min. It is preferred that the maximum temperature is chosen such that the obtained PC product is both porous and free from organic compounds.
g) Grinding the obtained PC product down to desired particle sizes using, e.g., ball milling, colloid milling or bead milling techniques.
h) Spray drying techniques can be used to form spherical particles of porous 1D PC grains. Spray drying techniques could be applied to the mixtures obtained in c) and d). This technique is optional.

### Example 3.

It is possible manufacture porous 1D PCs using extrusion techniques.
a) mixing nanoparticles with extrudable polymers
b) extrude thin polymer films (a few micrometers) containing nanoparticles.
c) stacking alternating polymer films containing nanoparticles on top of each other and
d) laminating the stacked polymer/nanoparticle films together by using heat.
e) heating the laminated multilayer structures in order to remove the polymer and to sinter the nanoparticles together in order to manufacture porous 1D PC grains.
f) grinding the porous 1D PC grains.

The extrusion technique also allows for several layers to be extruded simultaneously thereby creating, e.g., three polymer films deposited on top of each other in on step. Several multilayer structures can be laminated with each other and heated in order to remove the polymer and to sinter the nanoparticles together to yield a 1D PC.

### Example 4

It is possible to manufacture PCs using layer-by-layer self-assembly and to deposit alternated porous layers of particles exhibiting photonic crystal properties.

### Example 5

A silica (SiO₂) ink consisting of 1,7% by weight of silica (surface area: 230g/m²), 2.3% by weight of ethyl cellulose (viscosity 46 cP, 5 % in toluene/ethanol 80:20, Aldrich) and 96% by weight of terpineol (Fluka), was manufactured by bead milling using zirconia beads. The ink was passed through a three roll mill and finally the ink was filtered using a 1µm PTFE filter. A titania ink consisting of 2.6 % by weight of titania (TiO₂, anatase, particle size 8nm), 1.9% by weight of ethyl cellulose (viscosity 46 cP, 5 % in toluene/ethanol 80:20, Aldrich) and 95.5% by weight of terpineol was manufactured by bead milling using 0.1mm zirconia beads. The ink was passed through a three roll mill and finally the ink was filtered using a 1µm PTFE filter.

The titania ink and the silica ink were deposited using screen printing. The polyester screen used was 460 mesh. The printing speed was 300mm/s. The squeegee pressure was set to 3 bar. A wandress was used to remove dust from the glass substrates immediately prior to ink deposition. The glass substrates consisted of soda lime glass with a thickness of 2mm. The glass substrate area was 10cm x 10 cm. The printed area was 9cm x 9cm. First a layer of titania ink was deposited onto the glass substrate. The glass substrate and the deposited titania ink film was subjected to brief heat treatment (1min 180°C in air) in a conveyor belt oven to remove the solvent. Subsequently the glass substrate and the film was subjected to heat treatment at 500°C in air for 5 minutes. After cooling down to room temperature a second layer of silica ink was deposited onto the titania layer. The deposited silica ink was subjected to the same thermal and cooling treatment as the titania ink. A multilayer consisting of alternating layers of titania /silica was manufactured by alternating deposition and thermal/cooling treatment. Alternating multi-layers consisting of 2, 4, 6, 8, 10, 12, 14, 16 layers could be manufactured this way.

The final deposited multilayer could be removed by mechanical scraping using a doctor blade of steel, a plastic scraper or a ceramic blade such as a zirconia blade. The removed multilayer consisted of grains that were flat in shape and in where the grains consisted of a multilayer of alternating titania and silica, i.e., photonic crystal grains. The photonic crystal grains could be shaped into smaller sizes by grinding the grains using an agate mortar and a pestle.

### Example 6

A silica (SiO₂) ink consisting of 1,7% by weight of silica (surface area: 230g/m²), 10% by weight of glycerol and 88.3% by weight of terpineol (Fluka), was manufactured by bead milling using zirconia beads. The ink was passed through a three roll mill. Additionally, the ink was filtered using a 1 µm PTFE filter.

A titania ink consisting of 2.8 % by weight of titania (TiO₂, anatase, particle size 8nm), 10% by weight of glycerol and 87.2% by weight of terpineol was manufactured by bead milling using 0.1mm zirconia beads. The ink was passed through a three roll mill. Additionally, the ink was filtered using a 1 µm PTFE filter.

The titania ink and the silica ink were deposited using screen printing. The polyester screen used was 460 mesh. The printing speed was 300mm/s. The squeegee pressure was set to 3 bar. A wandres was used to remove dust from the plastic substrates immediately prior to ink deposition. The plastic substrates consisted of polyethylene coated paper (PECP). The substrate area was 30cm x 30 cm. The printed area was 25cm x 25cm. First a layer of titania ink was deposited onto the PECP. The PECP substrate and the deposited titania ink film was subjected to brief heat treatment (10min 100°C in air) in a conveyor belt oven to remove the solvent. After cooling down to room temperature a second layer of silica ink was deposited onto the titania layer. The deposited silica ink was subjected to the same thermal and cooling treatment as the titania ink. A multilayer consisting of alternating layers of titania /silica was manufactured by alternating deposition and thermal/cooling treatment. Alternating multi-layers consisting of 2, 4, 6, 8, 10, 12, 14, 16 layers could be manufactured this way.

The final deposited multilayer on the PECP substrate was rolled upp and put in a glass beaker and subsequently heated to 500°C for 30min in air. The heating caused the burning and removal of the organic PECP substrate leaving flakes of the deposited multilayer left in the glass beaker. The multilayer flakes were flat in shape and consisted of a multilayer of alternating titania and silica, i.e., photonic crystal grains. The obtained photonic crystal grains could be shaped into smaller sizes by grinding the grains using an agate mortar and a pestle.

## Claims

1. A Dye Sensitised Solar Cell (DSC) comprising 1D photonic crystals (PC) **characterised by** that the 1D PC are in the form of grains (8) and each grain (8) comprises several alternated porous layers of semiconducting nanoparticles creating a periodic variation of a refractive index in the 1D PC.

2. A DSC in accordance with claim 1, **characterised by** that the 1D PC grains have varying porosity and/or thickness and/or materials of the alternated layers.

3. A DSC in accordance with claim 1 or 2, **characterised by** that a major part of the 1D PC grains have sizes that are larger than lattice spacing in the 1D PC crystal.

4. A DSC in accordance with claim 1, 2 or 3, **characterised by** that the 1D PC grains form a semiconducting electrode of the DSC.

5. A DSC in accordance with claim 1, 2 or 3 **characterised by** that the 1D PC form a diffuse scattering layer.

6. A DSC in accordance with claim 1, 2, 3, 4 or 5, **characterised by** that the 1D PC grains are of TiO₂ or alternating layers of TiO₂ and SiO₂.

7. A DSC in accordance with claim 4 or 6, **characterised by** that the 1D PC grains are mixed with semiconducting electrode nanoparticles.

8. A DSC in accordance with claim 6 or 7, **characterised by** that the 1D PC grains or the mixture of 1D PC grains with semiconducting particles form a network having direct physical and electrical contact with a conducting substrate of the DSC or indirect contact via the semiconducting particles.

9. A DSC in accordance with claim 7 or 8, **characterised by** that the semiconducting nanoparticles are TiO₂ particles.

10. A DSC in accordance with any of the preceding claims **characterised by** that the 1D PC grains form patterns of different thicknesses in the DSC.

11. A method for manufacturing a DSC comprising a 1D PC **characterised by**
- depositing nanoparticles in layers onto a substrate layer;
- removing the substrate layer; and
- grinding the deposited structure of layers into grains (8) ;
- depositing the grains (8) to the DSC by printing or spraying.

12. A method for manufacturing a DSC in accordance with claim 11, **characterised by** that the depositing of nanoparticles is made by printing, preferably by screen printing, a suspension of nanoparticles onto the substrate.

13. A method for manufacturing a DSC in accordance with claim 11, **characterised by** that the depositing of nanoparticles is made by template-assisted synthesis, extrusion or layer-by-layer self assembly.

14. A method for manufacturing a DSC in accordance with any of claim 11-13, **characterised by** the deposited structure of layers is heated in order to sinter the nanoparticles.

## Patentansprüche

1. Farbstoffsolarzelle (DSC), aufweisend 1D-photonische Kristalle (PC), **dadurch gekennzeichnet, dass** die 1D-PC in Form von Körnern (8) vorliegen und jedes Korn (8) mehrere sich abwechselnde poröse Schichten aus halbleitenden Nanopartikeln aufweist, die eine periodische Variation eines Brechungsindex in den 1D-PC erzeugen.

2. DSC nach Anspruch 1, **dadurch gekennzeichnet, dass** die 1D-PC-Körner unterschiedliche Porositäten und/oder Dicken und/oder Materialien der sich abwechselnden Schichten aufweisen.

3. DSC nach Anspruch 1 oder 2, **dadurch gekennzeichnet, dass** ein großer Teil der 1D-PC-Körner Größen aufweisen, die größer sind als ein Gitterabstand in dem 1D-PC-Kristall.

4. DSC nach Anspruch 1, 2 oder 3, **dadurch gekennzeichnet, dass** die 1D-PC-Körner eine halbleitende Elektrode des DSC bilden.

5. DSC nach Anspruch 1, 2 oder 3, **dadurch gekennzeichnet, dass** die 1D-PC eine diffus streuende Schicht bilden.

6. DSC nach Anspruch 1, 2, 3, 4 oder 5, **dadurch gekennzeichnet, dass** die 1D-PC-Körner aus TiO₂ oder aus sich abwechselnden Schichten aus TiO₂ und SiO₂ bestehen.

7. DSC nach Anspruch 4 oder 6, **dadurch gekennzeichnet, dass** die 1D-PC-Körner mit halbleitenden Elektroden-Nanopartikeln vermischt sind.

8. DSC nach Anspruch 6 oder 7, **dadurch gekennzeichnet, dass** die 1D-PC-Körner oder die Mischung von 1D-PC-Körnern mit halbleitenden Partikeln ein Netzwerk bilden, das direkten physischen und elektrischen Kontakt zu einem leitenden Substrat der DSC hat oder indirekten Kontakt über die halbleitenden Partikel hat.

9. DSC nach Anspruch 7 oder 8, **dadurch gekennzeichnet, dass** die halbleitenden Nanopartikel TiO₂-Partikel sind.

10. DSC nach einem der vorgenannten Ansprüche, **dadurch gekennzeichnet, dass** die 1D-PC-Körner Muster mit verschiedenen Dicken in dem DSC bilden.

11. Verfahren zum Herstellen einer DSC, der einen 1D-PC aufweist, **gekennzeichnet durch**:
- Auftragen von Nanopartikeln in Schichten auf eine Substratschicht;
- Entfernen der Substratschicht; und
- Zermahlen der aufgetragenen Schichtenstruktur in Körner (8);
- Auftragen der Körner (8) auf die DSC **durch** Drucken oder Sprühen.

12. Verfahren zum Herstellen einer DSC nach Anspruch 11, **dadurch gekennzeichnet, dass** das Auftragen der Nanopartikel durch Drucken, vorzugsweise durch Siebdruck, einer Suspension von Nanopartikeln auf das Substrat erfolgt.

13. Verfahren zum Herstellen einer DSC nach Anspruch 11, **dadurch gekennzeichnet, dass** das Auftragen der Nanopartikel durch vorlagengestützte Synthese, Extrusion oder Schicht-auf-Schicht-Selbstmontage erfolgt.

14. Verfahren zum Herstellen einer DSC nach einem der Ansprüche 11 bis 13, **dadurch gekennzeichnet, dass** die aufgetragene Schichtenstruktur erhitzt wird, um die Nanopartikel zu sintern.

## Revendications

1. Une cellule solaire sensibilisée aux colorants (DSC) comprenant des cristaux photoniques (CP) monodimensionnel (1D), **caractérisée en ce que** les cristaux photoniques 1D (CP 1D) sont sous forme de grains et que chaque grain (8) comprend plusieurs couches poreuses alternées de nanoparticules semi-conductrices créant une variation périodique de l'indice de réfraction dans les CP 1D.

2. Une DSC selon la revendication 1, **caractérisée en ce que** les grains des CP 1D des couches alternées présentent diverses porosités et/ou diverses épaisseurs et/ou sont formés de divers matériaux.

3. Une DSC selon la revendication 1 ou 2, **caractérisée en ce que** la majeure partie des grains des CP 1D présente des dimensions qui sont plus grandes que supérieures au pas du réseau dans le cristal CP 1D.

4. Une DSC selon la revendication 1 2 ou 3, **caractérisée en ce que** les grains des CP 1D forment une électrode semi-conductrice de la DSC.

5. Une DSC selon la revendication 1, 2 ou 3 **caractérisée en ce que** les CP 1D forment une couche de diffusion diffuse.

6. Une DSC selon la revendication 1, 2, 3, 4 ou 5, **caractérisée en ce que** les grains des CP 1D sont formés de Ti02 ou de couches alternées de Ti02 et de Si02.

7. Une DSC selon la revendication 4 ou 6, **caractérisée en ce que** les grains des CP 1D sont mélangés avec des nanoparticules d'électrodes semi-conductrices.

8. Une DSC selon la revendication 6 ou 7, **caractérisée en ce que** les grains des CP 1D ou le mélange des grains de CP 1D avec des particules semi-conductrices forme un réseau ayant un contact physique et électrique direct avec un substrat conducteur du DSC ou un contact indirect via les particules semi-conductrices.

9. Un DSC selon la revendication 7 ou 8, **caractérisé en ce que** les nanoparticules semi-conductrices sont des particules de TiO₂.

10. Un DSC selon l'une quelconque des revendications précédentes, **caractérisé en ce que** les grains des CP 1D forment des configurations présentant des épaisseurs différentes dans le DSC.

11. Un procédé de fabrication de DSC comprenant CP 1D **caractérisé par**
- le dépôt de nanoparticules en couches sur une couche de substrat;
- l'enlèvement de la couche de substrat; et
- le broyage de la structure de couches déposée en grains (8);
- le dépot des grains (8) sur la DSC par impression ou pulvérisation.

12. Un procédé de fabrication de DSC selon la revendication 11, **caractérisé en ce que** le dépôt de nanoparticules est réalisé par impression, de préférence par sérigraphie, d'une suspension de nanoparticules sur le substrat.

13. Un procédé de fabrication de DSC selon la revendication 11, **caractérisé en ce que** le dépôt de nanoparticules est réalisé par synthèse assistée par matrice, extrusion ou auto-assemblage couche par couche.

14. Un procédé de fabrication de DSC selon l'une quelconque des revendications 11 à 13, **caractérisé par** la structure de couches déposées est chauffée afin de fritter les nanoparticules.
